# EUROPÄISCHE PATENTSCHRIFT

(11) **EP 3 701 846 B1**
(45) Veröffentlichungstag und Bekanntmachung des Hinweises auf die Patenterteilung: **31.07.2024**
(21) Anmeldenummer: 19159702.0
(22) Anmeldetag: 27.02.2019
(51) Int. Cl.: A47J 43/07

(54) **AUFNAHMEVORRICHTUNG ZUR AUFNAHME MINDESTENS EINES ZUBEREITUNGSGEFÄSSES FÜR SPEISEN MIT EINER HEIZEINRICHTUNG**
HOLDING DEVICE FOR HOLDING AT LEAST ONE HEATED PREPARATION CONTAINER FOR FOOD
DISPOSITIF DE RÉCEPTION PERMETTANT DE RECEVOIR AU MOINS UN RÉCIPIENT DE PRÉPARATION POUR ALIMENTS DOTÉ D'UN DISPOSITIF CHAUFFANT

(43) Veröffentlichungstag der Anmeldung: 02.09.2020
(73) Patentinhaber: Vorwerk & Co. Interholding GmbH, 42270 Wuppertal (DE)
(72) Erfinder: ZILS, Jürgen, 51399 Burscheid (DE)
(74) Vertreter: Dr. Solf & Zapf Patent- und Rechtsanwalts PartG mbB

(56) Entgegenhaltungen:
- EP-A1- 0 498 056
- EP-A1- 2 454 980
- EP-A2- 1 253 679
- EP-A2- 1 676 507
- ANONYMOUS: "Stift (Maschinenbau) - Wikipedia", 8 February 2019 (2019-02-08), XP055600505, Retrieved from the Internet <URL:https://de.wikipedia.org/wiki/Stift_(Maschinenbau)> [retrieved on 20190628]

## Beschreibung

Die Erfindung betrifft eine Aufnahmevorrichtung zur Aufnahme mindestens eines Zubereitungsgefäßes für Speisen mit einer Heizeinrichtung. Die Aufnahmevorrichtung weist mindestens einen Aufnahmebereich für das Zubereitungsgefäß und mindestens drei Kontaktbuchsen zur zumindest teilweisen Aufnahme von korrespondierenden Kontaktstiften an dem Zubereitungsgefäß auf. Die Kontaktbuchsen dienen insbesondere zur elektrischen Verbindung zumindest mit der Heizeinrichtung, bevorzugt weiteren elektrischen Funktionen, des Zubereitungsgefäßes, wenn das Zubereitungsgefäß in die Aufnahmevorrichtung eingesetzt ist.

Ferner betrifft die Erfindung eine Aufnahmestation sowie eine Küchenmaschine mit einer erfindungsgemäßen Aufnahmevorrichtung.

Eine Aufnahmevorrichtung für ein Zubereitungsgefäß für Speisen mit einer Heizeinrichtung ist beispielsweise aus DE 10 2010 016 090 A1 bekannt. Die offenbarte Aufnahmevorrichtung weist einen Aufnahmesockel auf und kontaktiert eine Heizeinrichtung des Zubereitungsgefäßes mit elektrischen Kontaktbuchsen, wenn dieses in den Aufnahmesockel eingesetzt ist. Die Aufnahmevorrichtung dient beispielsweise dazu, um in dem Zubereitungsgefäß vorhandene und in einem separaten Schritt mit einer Küchenmaschine zubereitete Speisen warmzuhalten.

Gemäß der Lehre der vorgenannten Druckschrift sind die elektrischen Kontaktbuchsen des Aufnahmesockels in einer Nichtbenutzungsstellung des Aufnahmesockels überdeckt, wobei die Überdeckung von den elektrischen Gegenkontakten des Zubereitungsgefäßes durchdringbar ist, um eine elektrische Verbindung herzustellen.

Die elektrischen Kontaktbuchsen des Aufnahmesockels sind allerdings stets mit einer Arbeitsspannung beaufschlagt oder zumindest beaufschlagbar. Dadurch besteht grundsätzlich ein Verletzungsrisiko durch einen elektrischen Schlag, wenn ein Benutzer bei nicht vorhandenem Zubereitungsgefäß einen elektrisch leitenden Gegenstand in eine der Kontaktbuchsen einführt.

Aus EP 1 676 507 A2 ist eine Stromversorgungsvorrichtung mit einem Anschlussteil zum Aufstecken eines Küchengeräts bekannt. Hierbei sind Kontaktelemente zum Kontaktieren des Küchengeräts vorgesehen. Eine Schaltvorrichtung verbindet die Kontaktelemente mit dem Stromnetz.

EP 0 498 056 A1 beschreibt ein Bügeleisen mit einem dreipoligen Steckkontakt. Der Steckkontakt ist in eine Steckdose mit drei Kontaktstiften einsetzbar. Die Kontaktstifte sind derart angeordnet, dass sie die zugehörigen Elektroschalter nur dann in eine Schließstellung verstellen, wenn drei Kontaktstifte gleichzeitig nach unten verstellt werden.

Aus EP 2 454 980 A1 ist ein Küchengerät bekannt, das ein Zubereitungsgefäß und eine Basisstation aufweist. Eine Gruppe gebogener Metallstifte an dem Zubereitungsgefäß werden in Buchsen, die sich an der Basisstation des Küchengeräts befinden, eingebracht.

EP 1 253 679 A2 offenbart einen elektrischen Verbinder für eine elektrische Verbindung zwischen einem Teekessel oder einem Bügeleisen und einer Basis über eine Stecker-Buchsen-Verbindung. Der Verbinder erlaubt es dem Stecker und der Buchse, sich um 360° zu drehen.

Ausgehend von dem vorgenannten Stand der Technik liegt der Erfindung daher die Aufgabe zugrunde, eine Aufnahmevorrichtung zur Aufnahme mindestens eines Zubereitungsgefäßes für Speisen mit einer Heizeinrichtung anzugeben, bei der die Benutzersicherheit gesteigert ist.

Die vorgenannte Aufgabe ist gemäß dem Kennzeichnungsteil des Anspruchs 1 bei einer gattungsgemäßen Aufnahmevorrichtung dadurch gelöst, dass mindestens eine erste der Kontaktbuchsen mindestens ein Signalmittel aufweist, und dass das Signalmittel mindestens ein Einbringsignal erzeugt, wenn einer der Kontaktstifte eines Zubereitungsgefäßes, aber auch jeder andere leitende oder nichtleitende Gegenstand, zumindest teilweise in die erste Kontaktbuchse eingebracht ist. Mindestens eine weitere der Kontaktbuchsen, vorzugsweise mindestens zwei weitere Kontaktbuchsen, ist bzw. sind erst dann mit einer Arbeitsspannung beaufschlagbar bzw. beaufschlagt, wenn ein Einbringsignal vorliegt. Wenn kein Einbringsignal vorliegt, ist keine der Kontaktbuchsen mit einer Arbeitsspannung beaufschlagbar.

Die Aufnahmevorrichtung ist zur zumindest teilweisen Aufnahme eines Zubereitungsgefäßes ausgebildet. Der Aufnahmebereich für das Zubereitungsgefäß ist vorzugsweise bezüglich seiner Form im Wesentlichen korrespondierend zu einem Bodenabschnitt des Zubereitungsgefäßes ausgebildet, um das Zubereitungsgefäß zumindest teilweise formschlüssig aufzunehmen. Beim Einbringen des Zubereitungsgefäßes in den Aufnahmebereich werden gleichzeitig alle Kontaktstifte in die Kontaktbuchsen eingeführt und die elektrischen Funktionselemente, beispielsweise eine Heizeinrichtung oder Thermoelemente, elektrisch verbunden.

Um die Benutzersicherheit zu steigern, ist erfindungsgemäß vorgesehen, dass mindestens eine weitere der Kontaktbuchsen erst dann mit einer Arbeitsspannung beaufschlagbar ist oder mit einer Arbeitsspannung beaufschlagt wird, wenn für die Kontaktbuchse mit dem Signalmittel ein Einbringsignal vorliegt. Die Aufnahmevorrichtung weist erfindungsgemäß eine Steuereinrichtung auf, die auf das Vorliegen mindestens eines Einbringsignals reagiert bzw. die elektrische Kontaktierung der Kontaktbuchsen in Abhängigkeit vom Vorliegen und Nichtvorliegen eines Einbringsignals steuert. Mit dem Einbringsignal kann beispielsweise eine Relais- oder Transistorschaltung gesteuert werden, um eine oder mehrere Kontaktbuchsen mit einer Arbeitsspannung beaufschlagbar zu machen.

Bei vorhandenem Einbringsignal liegt nicht in jedem Fall unmittelbar eine Arbeitsspannung an einer der weiteren Kontaktbuchsen an. Durch das Einbringsignal wird lediglich, z. B. von einer Steuereinrichtung, die jeweilige Kontaktbuchse zum Betrieb freigegeben. Das Anliegen einer Arbeitsspannung kann von weiteren durch den Benutzer eingeleiteten Schaltvorgängen abhängen. Liegt kein Einbringsignal vor, ist keine der Kontaktbuchsen mit einer Arbeitsspannung beaufschlagbar.

Das Signalmittel ist vorzugsweise so ausgebildet und eingerichtet, dass es zumindest mittelbar dazu verwendbar ist, das Vorhandensein eines Kontaktstiftes oder eines anderen Gegenstandes in der Kontaktbuchse mit dem Signalmittel zu erkennen. Beispielsweise weist das Signalmittel mindestens einen elektrisch leitenden Signalkontakt in der Kontaktbuchse auf, durch dessen Kontakt mit einem leitenden Kontaktstift ein Einbringsignal erzeugbar ist. Alternativ dazu ist vorgesehen, dass das Signalmittel mindestens zwei elektrisch leitende Signalkontakte in der Kontaktbuchse aufweist, zwischen denen zumindest durch einen leitenden Abschnitt eines Kontaktstiftes ein leitender Kontakt hergestellt wird, wodurch das Einbringsignal generiert wird.

Es ist auch vorgesehen, dass das Signalmittel mindestens einen Schalter, insbesondere Wipp-, Kipp- oder Magnetschalter, zur Erzeugung des Einbringsignals aufweist. Das Signalmittel ist dazu eingerichtet und ausgebildet, das Vorhandensein eines Kontaktstiftes oder eines beliebigen anderen Gegenstandes in der Kontaktbuchse festzustellen.

Das Signalmittel dient folglich dazu, eine Arbeitsspannung für mindestens eine der weiteren Kontaktbuchsen, vorzugsweise alle weiteren Kontaktbuchsen, freizugeben bzw. diese unmittelbar mit einer Arbeitsspannung zu beaufschlagen.

Die vorliegende Erfindung weist gegenüber dem Stand der Technik den Vorteil auf, dass das Risiko eines Stromschlags beim Einbringen eines leitenden Gegenstandes in eine der Kontaktbuchsen reduziert wird, da durch das Einbringen in die Kontaktbuchse mit dem Signalmittel nur die Arbeitsspannung in mindestens einer der weiteren Kontaktbuchsen freigegeben wird.

Gemäß einer alternativen Ausgestaltung der Aufnahmevorrichtung ist die eingangs genannte Aufgabe dadurch gelöst, dass mindestens zwei der Kontaktbuchsen jeweils mindestens ein Signalmittel aufweisen, und dass die Signalmittel mindestens ein Einbringsignal erzeugen, wenn in beide Kontaktbuchsen gleichzeitig jeweils einer der Kontaktstifte zumindest teilweise eingebracht ist. Vorzugsweise wird ein gemeinsames Einbringsignal erst dann erzeugt, wenn in beide Kontaktbuchsen gleichzeitig jeweils mindestens ein Kontaktstift eingeführt ist. Es ist aber auch vorgesehen, dass jedes der Signalmittel ein separates Einbringsignal erzeugt.

Bei einem gemeinsamen Einbringsignal für beide Kontaktbuchsen mit Signalmittel ist bei vorhandenem Einbringsignal mindestens eine der beiden Kontaktbuchsen, vorzugsweise mindestens beide Kontaktbuchsen, mit einer Arbeitsspannung beaufschlagbar. Bei separaten Einbringsignalen müssen für die Freigabe der Arbeitsspannung beide Einbringsignale gleichzeitig vorliegen. Ohne ein Einbringsignal bei gemeinsamem Einbringsignal bzw. ohne beide Einbringsignale bei separaten Einbringsignalen ist keine der Kontaktbuchsen mit einer Arbeitsspannung beaufschlagbar.

Die Kontaktbuchse bzw. die Kontaktbuchsen sind folglich erst dann mit einer Arbeitsspannung beaufschlagbar, wenn gleichzeitig in beide Kontaktbuchsen ein Kontaktstift bzw. ein anderer Gegenstand eingebracht ist. Insbesondere ist keine der Kontaktbuchsen mit einer Arbeitsspannung beaufschlagbar, wenn nur in eine der beiden Kontaktbuchsen ein Gegenstand eingebracht ist.

Eine derartige Ausgestaltung ist insbesondere dann vorteilhaft, wenn es sich bei den beiden Kontaktbuchsen um die Kontaktbuchsen handelt, die beispielsweise ein elektrisches Funktionsmittel, z. B. die Heizeinrichtung, mit einer Arbeitsspannung versorgen. Es ist aber auch vorgesehen, dass eine der beiden Kontaktbuchsen mit Signalmittel mit einem Erdungskontakt verbunden ist und an eine der beiden Kontaktbuchsen eine Arbeitsspannung anlegbar ist.

Es ist vorgesehen, dass mindestens die beiden Kontaktbuchsen mit Signalmittel zumindest so lange mit einem Erdungskontakt elektrisch verbunden sind, bis das Einbringsignal bzw. beide Einbringsignale vorliegen. Die elektrische Verschaltung der Kontaktbuchsen wird, z. B. von einer Steuereinrichtung, ggf. erst dann geändert, wenn die Bedingung, nämlich das zumindest teilweise und gleichzeitige Einbringen von zwei Kontaktstiften in zwei Kontaktbuchsen, erfüllt ist.

Es ist auch vorgesehen, dass in allen Kontaktbuchsen ein Signalmittel angeordnet ist, und dass eine Beaufschlagung mit einer Arbeitsspannung erst dann möglich ist, wenn für alle Kontaktbuchsen ein gemeinsames Einbringsignal oder entsprechend separate Einbringsignale vorliegen.

Diese Ausgestaltung der Aufnahmevorrichtung steigert die Sicherheit für einen Benutzer, da gleichzeitig zwei Gegenstände, insbesondere Kontaktstifte, eingebracht werden müssen, um den Arbeitszustand der Kontaktbuchsen freizugeben. Dies erfolgt üblicherweise nur dann, wenn tatsächlich ein Zubereitungsgefäß mit der erforderlichen Anzahl an Kontaktstiften aufgesetzt wird und alle Kontaktstifte gleichzeitig in die erforderlichen Kontaktbuchsen eindringen.

Ein besonders bevorzugtes Ausführungsbeispiel der Aufnahmevorrichtung sieht vor, dass die erste Kontaktbuchse stets elektrisch mit einem Erdungskontakt verbunden ist. Folglich handelt es sich um eine geerdete Kontaktbuchse.

Es ist vorgesehen, dass nur in dieser Kontaktbuchse ein Signalmittel angeordnet ist, so dass mindestens eine weitere Kontaktbuchse, vorzugsweise alle weiteren Kontaktbuchsen, bei Vorliegen eines Einbringsignals in der geerdeten Kontaktbuchse mit einer Arbeitsspannung beaufschlagbar sind.

Wird ein leitender Gegenstand, bei dem es sich beispielsweise nicht um einen Kontaktstift handelt, in die erste Kontaktbuchse eingebracht, wäre ein Benutzer leitend ausschließlich mit der Erde verbunden. Dass die weiteren Kontaktbuchsen dann mit einer Arbeitsspannung beaufschlagbar sind, wäre in diesem Fall für den Benutzer nicht gefährlich. Würde der leitende Gegenstand in eine der weiteren Kontaktbuchsen eingebracht, ohne dass ein Einbringsignal für die erste Kontaktbuchse - die geerdete Kontaktbuchse - vorliegt, sind diese nicht mit einer Arbeitsspannung beaufschlagbar.

Dieses Ausführungsbeispiel weist den Vorteil auf, dass mit einem einzigen Signalmittel in einer einzigen Kontaktbuchse eine sehr zuverlässige Sicherheit gegen einen Stromschlag für einen Benutzer gewährleistet wird.

Das Maß der Sicherheit für einen Benutzer lässt sich insbesondere dadurch steigern, dass gemäß einer weiteren Ausgestaltung vorgesehen ist, dass ein Einbringsignal erst bei einer vorbestimmten Eindringtiefe eines Kontaktstiftes erzeugt wird. Ein Einbringsignal wird folglich erst erzeugt, wenn der Kontaktstift die vorbestimmte Eindringtiefe erreicht hat. Als vorteilhaft haben sich Eindringtiefen zwischen 10 % und 75 %, insbesondere 50 %, der Gesamttiefe der Kontaktbuchse herausgestellt. Ferner vorteilhaft sind Eindringtiefen zur Erzeugung des Einbringsignals zwischen 4 mm und 12 mm, insbesondere 4 mm, 6 mm, 7 mm, 8 mm, 10 mm oder 12 mm. Die Eindringtiefe wird ausgehend von einer Eintrittsöffnung der Kontaktkammer für einen Kontaktstift gemessen.

Durch die vorbestimmte Eindringtiefe lässt sich auch gewährleisten, dass die elektrischen Funktionsmittel, z. B. die Heizeinrichtung, in einem Zubereitungsgefäß erst dann einschaltbar, also mit einer Arbeitsspannung versorgt werden, wenn das Zubereitungsgefäß ordnungsgemäß in den Aufnahmebereich eingebracht ist bzw. sich kurz davor befindet.

Die Aufnahmevorrichtung wird gemäß einer weiteren Ausgestaltung dadurch weitergebildet, dass das Signalmittel mindestens ein Schaltelement aufweist, beispielsweise einen Mikroschalter oder einen Magnetschalter, insbesondere einen Reed-Kontakt. Das Schaltelement weist vorzugsweise zwei Schaltzustände auf, nämlich einen Schaltzustand, in dem kein Einbringsignal erzeugt wird, und einen Schaltzustand, bei dem ein Einbringsignal erzeugt wird. Vorzugsweise beträgt der Schaltweg des Schaltelements etwa 1 mm. Die Eindringtiefe eines Kontaktstiftes in die Kontaktkammer zur Betätigung des Schaltelements beträgt wie vorstehend beschrieben beispielsweise zwischen 4 mm und 12 mm.

Mit dem Einbringsignal kann beispielsweise eine Relais- oder Transistorschaltung gesteuert werden, um eine oder mehrere Kontaktbuchsen für eine Arbeitsspannung freizugeben. Es ist auch vorgesehen, dass das Einbringsignal von einer Steuereinheit ausgewertet wird. Das Schaltelement wird beispielsweise unmittelbar durch einen in eine Kontaktbuchse eingebrachten Kontaktstift betätigt.

Insbesondere die konstruktive Realisierung wird dadurch vereinfacht, dass gemäß einer Ausgestaltung vorgesehen ist, dass das Signalmittel ein in der Kontaktbuchse bewegbar gehaltenes Betätigungselement aufweist, und dass mit dem Betätigungselement zumindest mittelbar das Einbringsignal erzeugbar ist. Das Betätigungselement ist beispielsweise ein innerhalb der Kontaktbuchse bewegbar gehaltener Stift, der unterhalb von elektrischen Kontaktträgern der Kontaktbuchse bewegbar angeordnet ist.

Wird ein Kontaktstift eines Zubereitungsgefäßes in die Kontaktbuchse eingebracht, wird das Betätigungselement durch den Kontaktstift verschoben, insbesondere linear oder kreisförmig verschoben, und durch die Verschiebung, vorzugsweise mittelbar oder unmittelbar, das Einbringsignal erzeugt. Das Betätigungselement ist vorteilhaft zwischen einer Ausgangsposition und einer Betätigungsposition bewegbar gehalten, wobei in der Ausgangsposition kein Einbringsignal vorliegt und in der Betätigungsposition ein Einbringsignal vorliegt. Vorzugsweise wird mit dem Betätigungselement, insbesondere in der Betätigungsposition, ein elektrisches Schaltelement betätigt, um das Einbringsignal zu erzeugen.

Über die Länge des Betätigungselementes bzw. die Erstreckung des Betätigungselementes in der Kontaktbuchse, insbesondere ausgehend von der der Einbringöffnung für einen Kontaktstift gegenüberliegenden Seite, und dem zwischen Ausgangsposition und Betätigungsposition zurückgelegtem Weg ist die vorbestimmte Eindringtiefe eines Kontaktstiftes festlegbar, bei der ein Einbringsignal erzeugt wird.

Das Betätigungselement ist insbesondere aus einem nichtleitenden Material, beispielsweise Kunststoff, hergestellt, um eine Übertragung von elektrischen Strömen zu verhindern. Es ist auch vorgesehen, dass das Betätigungselement mindestens einen leitenden Kontaktbereich oder leitende Kontaktbereiche aufweist, um zur Erzeugung des Einbringsignals in einer bestimmten Position eine leitende Verbindung zwischen zwei elektrisch leitenden Schaltkontakten herzustellen oder einen elektrisch leitenden Schaltkontakt zu kontaktieren.

Die Montage der Aufnahmevorrichtung lässt sich gemäß einer weiteren Ausgestaltung insbesondere dadurch vereinfachen, dass das Betätigungselement in einem Schaltgehäuse geführt ist, und dass das Schaltgehäuse schwimmend, insbesondere in einem Gehäuse der Aufnahmevorrichtung, gelagert ist. Vorteilhaft ist das Schaltgehäuse mindestens zweiteilig ausgebildet.

Vorzugsweise ist das Betätigungselement in dem Schaltgehäuse bewegbar gehalten und wird zumindest teilweise von dem Schaltgehäuse geführt. Vorteilhaft ist das Betätigungselement zwischen einer Ausgangsposition und einer Betätigungsposition bewegbar gehalten. Insbesondere ragt das Betätigungselement zumindest teilweise aus dem Schaltgehäuse heraus.

Zu Montagezwecken hat es sich als vorteilhaft herausgestellt, wenn das Schaltgehäuse mindestens zweiteilig ausgebildet ist. Vorzugsweise wird das Betätigungselement aus einer Einbringrichtung in ein erstes Gehäuseteil des Schaltgehäuses eingeführt und tritt an der gegenüberliegenden Seite durch eine entsprechende Öffnung aus dem Schaltgehäuse heraus. Aus der Montagerichtung wird das Schaltgehäuse mit einem zweiten Gehäuseteil verschlossen und die beiden Gehäuseteile beispielsweise miteinander verrastet.

Dadurch, dass das Betätigungselement in dem separaten Schaltgehäuse geführt ist, kann das Schaltgehäuse relativ zu einer Kontaktaufnahme mit den Kontaktbuchsen angeordnet werden und schwimmend, beispielsweise in dem Gehäuse der Aufnahmevorrichtung, gelagert werden. Vorzugsweise besteht auch das Gehäuse der Aufnahmevorrichtung aus mindestens zwei Teilen, die zusammengefügt werden, wobei zwischen den beiden zusammengefügten Teilen die Kontaktaufnahme mit den Kontaktbuchsen sowie das Schaltgehäuse angeordnet sind, vorzugsweise schwimmend gelagert sind.

Insbesondere bei einer schwimmenden Lagerung hat sich gemäß einer weiteren Ausgestaltung als vorteilhaft herausgestellt, wenn vorgesehen ist, dass eine Kontaktaufnahme, die die Kontaktbuchsen aufweist, und das Schaltgehäuse über das Betätigungselement zueinander ausgerichtet sind, insbesondere in ihrer Position zueinander gehalten werden. Beispielsweise ragt das Betätigungselement an einer Seite des Schaltgehäuses zumindest teilweise aus dem Schaltgehäuse heraus. Wird nun das Betätigungselement zumindest teilweise in eine Kontaktbuchse eingebracht, sind die Kontaktaufnahme und das Schaltgehäuse über das Betätigungselement miteinander verbunden bzw. relativ zueinander ausgerichtet.

Eine weitere Ausgestaltung der Aufnahmevorrichtung sieht vor, dass ein Rückstellmittel auf das Betätigungselement wirkt, bevorzugt dass das Rückstellmittel stets eine Kraft in Richtung einer Ausgangsposition auf das Betätigungselement bewirkt. Das Rückstellelement wirkt vorteilhaft so auf das Betätigungselement, dass das Betätigungselement stets in eine Ausgangsposition gedrängt wird, in der kein Einbringsignal erzeugt ist. Das Rückstellelement sorgt stets dafür, dass die Freigabe der Beaufschlagung mit einer Arbeitsspannung für einige, vorzugsweise alle, Kontaktbuchsen nicht vorliegt. Beispielsweise weist das Rückstellmittel mindestens eine Feder und/oder mindestens einen Magneten auf, mit dem bzw. der das Betätigungselement in die Ausgangsposition gedrängt wird bzw. drängt.

Insbesondere um weitere elektrische Funktionalitäten an dem Zubereitungsgefäß zu realisieren, ist gemäß einer weiteren Ausgestaltung der Aufnahmevorrichtung vorgesehen, dass mindestens fünf Kontaktbuchsen ausgebildet sind. Vorzugsweise dient eine Kontaktbuchse zur Kontaktierung eines Erdungskontaktes, zwei Kontaktbuchsen zur Kontaktierung des elektrischen Heizmittels, insbesondere einer Widerstandsheizung, und zwei weitere Kontakte dienen zur Kontaktierung von NC-Signalen, insbesondere zur Kontaktierung mindestens eines im Boden des Zubereitungsgefäßes angeordneten Thermoelements.

Die eingangs genannte Aufgabe ist ferner gelöst mit einer Küchenmaschine, die mindestens eine Aufnahmevorrichtung, eine Stromversorgung und mindestens einen Motor zum Antrieb eines rotierenden Werkzeugs in einem Zubereitungsgefäß sowie insbesondere eine Steuereinheit zum zumindest teilautomatischen Abhandeln eines Zubereitungsprogramms aufweist. Die Aufnahmevorrichtung in der Küchenmaschine ist gemäß einem der vorbeschriebenen Ausführungsbeispiele ausgestaltet.

Zudem ist die eingangs genannte Aufgabe mit einer Aufnahmestation für ein Zubereitungsgefäß für Speisen mit einer Heizeinrichtung gelöst, bei der die Aufnahmevorrichtung gemäß einem der vorbeschriebenen Ausführungsbeispiele ausgestaltet ist.

Gemäß einer ersten Ausgestaltung der Aufnahmestation ist bevorzugt vorgesehen, dass die Aufnahmevorrichtung mindestens eine mechanische Schnittstelle zum Antrieb eines rotierenden Werkzeuges, z. B. einer Mix-, Zerkleinerungs- und/oder Rühreinrichtung, in dem Zubereitungsgefäß aufweist. Die Aufnahmevorrichtung weist insbesondere mindestens einen Motor auf, mit dem die mechanische Schnittstelle antreibbar ist. Die Aufnahmestation kann dann sowohl zum Warmhalten einer in dem Zubereitungsgefäß angeordneten Speise als auch zum Umrühren verwendet werden, um beispielsweise ein Anbrennen zu verhindern.

Eine Weiterbildung der Aufnahmestation sieht zudem vor, dass die Aufnahmestation eine separate Stromversorgung aufweist. Durch die eigene Stromversorgung kann die Aufnahmestation autark betrieben werden.

Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel einer Aufnahmevorrichtung in einer Aufnahmestation in perspektivischer Ansicht,
- Fig. 2: ein Ausführungsbeispiel eines Zubereitungsgefäßes zur Verwendung mit einer Aufnahmevorrichtung in teilweiser geschnittener Seitenansicht und
- Fig. 3: eine Aufnahmevorrichtung in teilweise geschnittener Ansicht.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist ist sie durch die Ansprüche definiert.

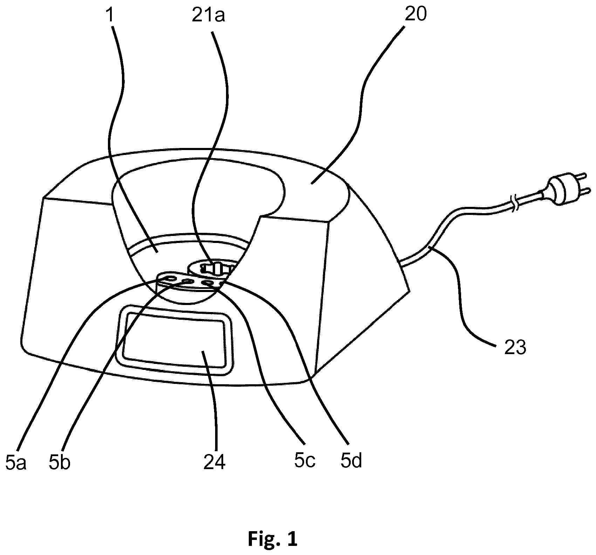

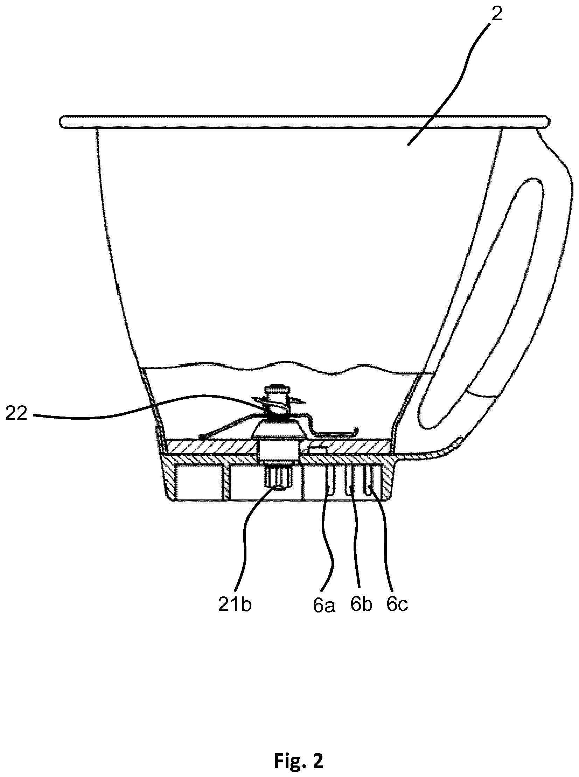

Fig. 1 zeigt ein Ausführungsbeispiel einer Aufnahmevorrichtung 1 zur Aufnahme mindestens eines in Fig. 2 gezeigten Zubereitungsgefäßes 2 für Speisen mit einer Heizeinrichtung. Die Aufnahmevorrichtung 1 ist an einer Aufnahmestation 20 angeordnet.

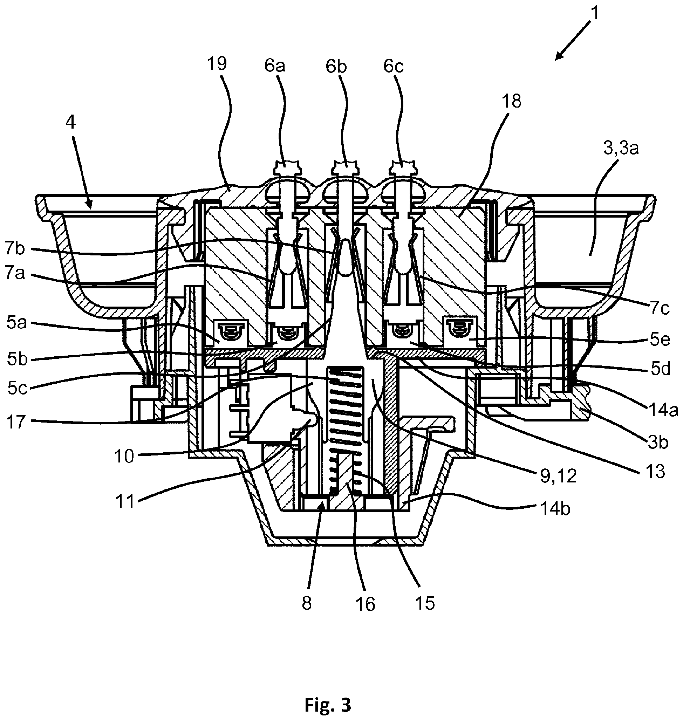

Fig. 3 zeigt ein Ausführungsbeispiel einer Aufnahmevorrichtung 1 gemäß Fig. 1 in einer zumindest teilweise geschnittenen Ansicht. Die Aufnahmevorrichtung 1 weist mindestens ein Gehäuse 3 auf, das bei diesem Ausführungsbeispiel zweiteilig ausgebildet ist, nämlich einen ersten Gehäuseteil 3a und einen zweiten Gehäuseteil 3b aufweist, die zusammengefügt sind. Insbesondere sind der erste Gehäuseteil 3a und der zweite Gehäuseteil 3b form- und/oder kraftschlüssig, insbesondere kraftformschlüssig, zusammengefügt.

Das Gehäuse 3, insbesondere der erste Gehäuseteil 3a, weist einen Aufnahmebereich 4 für das Zubereitungsgefäß 2 auf, der insbesondere korrespondierend zu einem Unterteil eines Zubereitungsgefäßes 2 ausgebildet ist. Die Aufnahmevorrichtung 1 weist gemäß Fig. 1 und Fig. 3 fünf Kontaktbuchsen 5a, 5b, 5c, 5d, 5e zur Aufnahme von korrespondierenden Kontaktstiften 6a, 6b, 6c des Zubereitungsgefäßes 2 auf. Die Kontaktbuchsen 5a, 5b, 5c, 5d, 5e und die Kontaktstifte 6a, 6b, 6c dienen unter anderem der elektrischen Verbindung der Heizeinrichtung im Zubereitungsgefäß 2. In der Schnittansicht der Fig. 3 sind nur drei von insgesamt fünf vorhandenen Kontaktstiften 6a, 6b, 6c dargestellt.

Beim Einsetzen eines Zubereitungsgefäßes 2 gemäß Fig. 2 in eine Aufnahmevorrichtung 1 gemäß Fig. 1 und Fig. 3, insbesondere in den Aufnahmebereich 4, werden die Kontaktstifte 6a, 6b, 6c automatisch in den Kontaktbuchsen 5b, 5c, 5d aufgenommen und elektrisch kontaktiert. Zur elektrischen Kontaktierung weist jede Kontaktbuchse 5a, 5b, 5c, 5d, 5e mindestens einen gitterartig ausgebildeten Kontaktträger 7a, 7b, 7c auf. Die Kontaktträger 7a, 7b, 7c, umgreifen einen eingebrachten Kontaktstift 6a, 6b, 6c federnd an dessen Umfang und stellen damit eine elektrische Verbindung her.

Eine erste der Kontaktbuchsen 5c weist ein Signalmittel 8 zum Erzeugen mindestens eines Einbringsignals auf, wenn ein Kontaktstift 6b zumindest teilweise in die erste Kontaktbuchse 5c eingebracht ist. Die Aufnahmevorrichtung 1 weist ferner Mittel, z. B. eine Steuereinrichtung und/oder eine Relaisschaltung, auf, die derart eingerichtet und ausgebildet sind, dass gewährleistet ist, dass die weiteren der Kontaktbuchsen 5a, 5b, 5d, 5e erst dann jeweils mit einer Arbeitsspannung beaufschlagbar ist, wenn ein Einbringsignal zumindest für die erste Kontaktbuchse 5c vorliegt.

Bei dem in Fig. 1 und Fig. 3 dargestellten Ausführungsbeispiel einer Aufnahmevorrichtung 1 ist die erste Kontaktbuchse 5c dauerhaft mit einem Erdungskontakt verbunden. Es ist sichergestellt, dass die weiteren Kontaktbuchsen 5a, 5b, 5d, 5e erst dann mit einer Arbeitsspannung beaufschlagbar sind, wenn ein Kontaktstift 6b in die erste Kontaktbuchse 5c ausreichend tief eingebracht ist. Dadurch wird einerseits eine Erkennung des Zubereitungsgefäßes realisiert und gleichzeitig gewährleistet, dass ein Benutzer beim Einbringen von anderen leitenden Gegenständen als den Kontaktstiften 6a, 6b, 6c in die Kontaktbuchsen 5a, 5b, 5c, 5d, 5e keiner Arbeitsspannung ausgesetzt ist.

Bei dem Ausführungsbeispiel gemäß Fig. 3 weist das Signalmittel 8 ein in der ersten Kontaktbuchse 5c bewegbar gehaltenes Betätigungselement 9 auf. Das Betätigungselement 9 ist zwischen einer in Fig. 3 dargestellten Ausgangsposition und einer - nicht dargestellten - Betätigungsposition bewegbar. In der Betätigungsposition betätigt das Betätigungselement 9 mit einer Schaltflanke 10 ein Schaltelement 11, das bei diesem Ausführungsbeispiel als Mikroschalter ausgebildet ist. Über den Mikroschalter 11 wird eine - nicht näher dargestellte - Relaisschaltung betätigt, mit der die weiteren Kontaktbuchsen 5a, 5b, 5d, 5e für eine Beaufschlagung mit einer Arbeitsspannung freigegeben werden oder mit einer Arbeitsspannung beaufschlagt werden.

Gemäß Fig. 3 weist das Betätigungselement 9 einen Grundkörper 12 auf, der sowohl die Schaltflanken 10 als auch eine umlaufende Anschlagfläche 13 ausbildet. Die Anschlagfläche 13 liegt in der Ausgangsposition an einem zweiteilig ausgebildeten Schaltgehäuse 14 an, in dem das Betätigungselement 9 und das Schaltelement 11 gehalten sind. Das Schaltgehäuse 14 ist zweiteilig ausgebildet und weist einen ersten Gehäuseteil 14a und einen zweiten Gehäuseteil 14b auf, die miteinander verbunden sind. Das Schaltgehäuse 14 ist schwimmend in dem Gehäuse 3, insbesondere zwischen dem ersten Gehäuseteil 3a und dem zweiten Gehäuseteil 3b, gehalten.

Ausgehend von dem Grundkörper 12 des Betätigungselementes 9 erstreckt sich ein im Wesentlichen konisch verlaufender Vorsprung, der aus dem Schaltgehäuse 14 heraus- und in die erste Kontaktbuchse 5c hineinragt. Das Betätigungselement 9 wird von einem Rückstellmittel 15 in der dargestellten Ausgangsposition gehalten. Das Rückstellmittel 15 stützt sich am zweiten Gehäuseteil 14b des Schaltgehäuses 14 ab und wird von einem Führungsdorn 16 in Position gehalten. Das Rückstellmittel 15 in Form einer Feder dringt in eine korrespondierende Ausnehmung 17 im Grundkörper 12 des Betätigungselementes 9 ein und wird dadurch geführt.

Wird ein Kontaktstift 6b in die Kontaktbuchse 5c eingeführt, wird der Kontaktstift 6b zunächst von dem Kontaktträger 7b kontaktiert. Im weiteren Verlauf schiebt der Kontaktstift 6b das Betätigungselement 9 entgegen der Kraft des als Feder ausgebildeten Rückstellmittels 15 nach unten und betätigt nach Erreichen der Betätigungsposition den Mikroschalter 11, um die Beaufschlagung mit einer Arbeitsspannung für die weiteren Kontaktbuchsen 5a, 5b, 5d, 5e freizugeben. Die Kontaktbuchsen 5a, 5b, 5c, 5d, 5e sind in einer Kontaktaufnahme 18 ausgebildet und angeordnet, die ebenfalls schwimmend im Gehäuse 3 zwischen dem ersten Gehäuseteil 3a und dem zweiten Gehäuseteil 3b gelagert ist.

Die Kontaktaufnahme 18, insbesondere die Kontaktbuchsen 5a, 5b, 5c, 5d, 5e, werden von einer Schutzdichtung 19 überdeckt, die das Eindringen von Schmutz in die Kontaktbuchsen 5a, 5b, 5c, 5d, 5e verhindert und von Kontaktstiften 6a, 6b, 6c durchdrungen werden kann. Die Kontaktstifte 6a, 6b, 6c eines Zubereitungsgefäßes 2, beispielsweise gemäß Fig. 2, werden gemäß Fig. 3 dadurch in die Kontaktbuchsen 5b, 5c, 5d eingebracht, dass das Zubereitungsgefäß 2 in den Aufnahmebereich 4 eingesetzt wird.

Besonders bevorzugt ist die Aufnahmevorrichtung 1 - wie in Fig. 1 gezeigt - als Teil einer Aufnahmestation 20 für ein Zubereitungsgefäß 2 für Speisen mit einer Heizeinrichtung ausgebildet. In der Aufnahmestation 20 kann folglich ein Zubereitungsgefäß 2 gemäß Fig. 2 aufgenommen und elektrisch kontaktiert werden. Neben den Kontaktbuchsen 5a, 5b, 5c, 5d, 5e zur elektrischen Kontaktierung weist die Aufnahmevorrichtung 1 mindestens eine mechanische Schnittstelle 21a zum Antrieb eines in Fig. 2 dargestellten rotierenden Werkzeugs 22 in dem Zubereitungsgefäß 2 auf. Das Zubereitungsgefäß 2 weist eine korrespondierende mechanische Schnittstelle 21b auf. Bei diesem Ausführungsbeispiel ist die mechanische Schnittstelle 21b am Zubereitungsgefäß 2 im Wesentlichen als Innensechskantvorsprung und die mechanische Schnittstelle 21a an der Aufnahmestation 20 als Innensechskantbuchse ausgebildet.

Mittels der mechanischen Schnittstellen 21a, 21b ist bei eingesetztem Zubereitungsgefäß 2 das rotierende Werkzeug 22 bewegbar sowie über die Kontaktierungsmittel 5 die Heizeinrichtung betreibbar. Auf diese Weise kann mit der Aufnahmestation 20 ein in dem Zubereitungsgefäß 2 zubereitetes Nahrungsmittel warmgehalten und durch Rühren ein Anbrennen verhindert werden. Vorteilhaft weist die Aufnahmestation 20 eine - nicht dargestellte - Steuereinrichtung auf, mit der die Heizeinrichtung und das rotierende Werkzeug 22 bedarfsgerecht steuerbar sind. Die Aufnahmestation 20 weist zudem eine eigene Stromversorgung 23 und ein Bedienmittel 24, hier in Form eines Touch-Bedienfeldes, auf. Mit dem Bedienmittel 24 wird beispielsweise die Heizeinrichtung oder der Motor zumindest mittelbar betätigt.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben, wie sie durch die Ansprüche definiert ist.

### Bezugszeichen

- 1: Aufnahmevorrichtung
- 2: Zubereitungsgefäß
- 3: Gehäuse der Aufnahmevorrichtung
- 3a: Erster Gehäuseteil
- 3b: Zweiter Gehäuseteil
- 4: Aufnahmebereich
- 5: Kontaktierungsmittel
- 5a-e: Kontaktbuchsen
- 6a-c: Kontaktstifte
- 7a-e: Kontaktträger
- 8: Signalmittel
- 9: Betätigungselement
- 10: Schaltflanke
- 11: Schaltelement
- 12: Grundkörper
- 13: Anschlagfläche
- 14: Schaltgehäuse
- 14a: Erstes Gehäuseteil
- 14b: Zweites Gehäuseteil
- 15: Rückstellmittel
- 16: Führungsdorn
- 17: Ausnehmung
- 18: Kontaktaufnahme
- 19: Schutzdichtung
- 20: Aufnahmestation
- 21a: Schnittstelle an der Aufnahmestation 20
- 21b: Schnittstelle an dem Zubereitungsgefäß 2
- 22: Rotierendes Werkzeug
- 23: Stromversorgung
- 24: Bedienmittel

## Patentansprüche

1. Aufnahmevorrichtung (1) zur Aufnahme mindestens eines Zubereitungsgefäßes (2) für Speisen mit einer Heizeinrichtung, aufweisend mindestens einen Aufnahmebereich (4) für das Zubereitungsgefäß (2) und mindestens drei Kontaktbuchsen (5a, 5b, 5c, 5d, 5e) zur zumindest teilweisen Aufnahme von korrespondierenden Kontaktstiften (6a, 6b, 6c) an dem Zubereitungsgefäß (2),
**dadurch gekennzeichnet, dass**
mindestens eine erste der Kontaktbuchsen (5c) mindestens ein Signalmittel (8) aufweist, dass das Signalmittel (8) mindestens ein Einbringsignal erzeugt, wenn einer der Kontaktstifte (6b) zumindest teilweise in die erste Kontaktbuchse (5c) eingebracht ist, dass bei vorhandenem Einbringsignal mindestens eine weitere der Kontaktbuchsen (5a, 5b, 5d, 5e) mit einer Arbeitsspannung beaufschlagbar ist, dass ohne Einbringsignal keine der Kontaktbuchsen (5a, 5b, 5c, 5d, 5e) mit einer Arbeitsspannung beaufschlagbar ist, dass die erste der Kontaktbuchsen (5c) elektrisch mit einem Erdungskontakt verbunden ist, und dass die Aufnahmevorrichtung eine Steuereinrichtung aufweist, die die elektrische Kontaktierung der Kontaktbuchsen in Abhängigkeit vom Vorliegen und Nichtvorliegen eines Einbringsignals steuert.

2. Aufnahmevorrichtung (1) nach dem Oberbegriff des Anspruchs 1,
**dadurch gekennzeichnet, dass**
mindestens zwei der Kontaktbuchsen (5a, 5c, 5c, 5d, 5e) jeweils mindestens ein Signalmittel (8) aufweisen, dass die Signalmittel (8) mindestens ein Einbringsignal erzeugen, wenn in beide Kontaktbuchsen (5a, 5b, 5d, 5e) gleichzeitig jeweils einer der Kontaktstifte (6a, 6b, 6c) zumindest teilweise eingebracht ist, dass bei vorhandenem Einbringsignal mindestens eine der Kontaktbuchsen (5a, 5b, 5c, 5d, 5e) mit einer Arbeitsspannung beaufschlagbar ist, dass ohne Einbringsignal keine der Kontaktbuchsen (5a, 5b, 5d, 5e) mit einer Arbeitsspannung beaufschlagbar ist, dass eine der beiden Kontaktbuchsen (5a, 5b, 5d, 5e) mit Signalmitteln (8) mit einem Erdungskontakt verbunden ist und an eine der beiden Kontaktbuchsen (5a, 5b, 5d, 5e) eine Arbeitsspannung anlegbar ist, und dass die Aufnahmevorrichtung eine Steuereinrichtung aufweist, die die elektrische Kontaktierung der Kontaktbuchsen in Abhängigkeit vom Vorliegen und Nichtvorliegen eines Einbringsignals steuert.

3. Aufnahmevorrichtung (1) nach einem der Ansprüche 1 oder 2,
**dadurch gekennzeichnet, dass**
ein Einbringsignal bei einer vorbestimmten Eindringtiefe eines Kontaktstiftes (6a, 6b, 6c) in eine Kontaktbuchse (5a, 5b, 5c, 5d, 5d) erzeugt wird, insbesondere bei einer Eindringtiefe von zwischen 10 % und 75 %, vorzugsweise 50 %, der Gesamttiefe einer Kontaktbuchse (5a, 5b, 5c, 5d, 5d).

4. Aufnahmevorrichtung (1) nach einem der Ansprüche 1 bis 3,
**dadurch gekennzeichnet, dass**
das Signalmittel (8) mindestens ein elektrisches Schaltelement (11) aufweist, insbesondere einen Mikroschalter oder einen Magnetschalter.

5. Aufnahmevorrichtung (1) nach einem der Ansprüche 1 bis 4,
**dadurch gekennzeichnet, dass**
das Signalmittel (8) ein in der Kontaktbuchse (5c) bewegbar gehaltenes Betätigungselement (9) aufweist, und dass mit dem Betätigungselement (9) zumindest mittelbar das Einbringsignal erzeugbar ist.

6. Aufnahmevorrichtung (1) nach Anspruch 5,
**dadurch gekennzeichnet, dass**
das Betätigungselement (9) zumindest teilweise, insbesondere vollständig, aus einem nichtleitenden Material ausgebildet ist.

7. Aufnahmevorrichtung (1) nach Anspruch 5 oder 6,
**dadurch gekennzeichnet, dass**
das Betätigungselement (9) in einem Schaltgehäuse (14) geführt ist, und dass das Schaltgehäuse (14) schwimmend gelagert ist, insbesondere dass das Schaltgehäuse (14) mindestens zweiteilig ausgebildet ist.

8. Aufnahmevorrichtung (1) nach einem der Ansprüche 5 bis 7,
**dadurch gekennzeichnet, dass**
ein Rückstellmittel (15) auf das Betätigungselement (9) wirkt, bevorzugt dass das Rückstellmittel (15) stets eine Kraft in Richtung einer Ausgangsposition auf das Betätigungselement (9) bewirkt, besonders bevorzugt dass das Rückstellmittel (15) mindestens eine Feder und/oder mindestens einen Magneten aufweist.

9. Aufnahmevorrichtung (1) nach Anspruch 7 oder 8,
**dadurch gekennzeichnet, dass**
das Schaltgehäuse (14) und eine die Kontaktbuchsen (5a, 5b, 5c, 5d, 5e) enthaltende Kontaktaufnahme (18) mit dem Betätigungselement (9) zueinander ausgerichtet sind.

10. Aufnahmevorrichtung (1) nach einem der Ansprüche 1 bis 9,
**dadurch gekennzeichnet, dass**
mindestens fünf Kontaktbuchsen (5a, 5b, 5c, 5d, 5e) vorhanden sind, insbesondere dass eine erste Kontaktbuchse (5c) mit einem Erdungskontakt verbunden ist, dass eine zweite Kontaktbuchse (5b) und eine dritte Kontaktbuchse (5d) der Verbindung der Heizeinrichtung sowie eine vierte Kontaktbuchse (5a) und eine fünfte Kontaktbuchse (5e) der Verbindung von NC-Signalen dienen.

11. Küchenmaschine mit mindestens einer Aufnahmevorrichtung (1) für mindestens ein Zubereitungsgefäß (2) für Speisen mit einer Heizeinrichtung, mindestens einer Stromversorgung und mindestens einem Motor zum Antrieb eines rotierenden Werkzeugs (22) in dem Zubereitungsgefäß (2),
**dadurch gekennzeichnet, dass**
die Aufnahmevorrichtung (1) nach mindestens einem der Ansprüche 1 bis 10 ausgebildet ist.

12. Aufnahmestation (20) für ein Zubereitungsgefäß (2) für Speisen mit einer Heizeinrichtung, mit mindestens einer Aufnahmevorrichtung (1) für das Zubereitungsgefäß (2),
**dadurch gekennzeichnet, dass**
die Aufnahmevorrichtung (1) nach mindestens einem der Ansprüche 1 bis 10 ausgebildet ist.

13. Aufnahmestation (20) nach Anspruch 12,
**dadurch gekennzeichnet, dass**
die Aufnahmevorrichtung (1) mindestens eine mechanische Schnittstelle (21a) zum Antrieb eines rotierenden Werkzeugs (22) in einem aufnehmbaren Zubereitungsgefäß (2) aufweist.

## Claims

1. Mounting device (1) for receiving at least one preparation vessel (2) for food with a heating device, comprising at least one receiving portion (4) for the preparation vessel (2) and at least three contact sockets (5a, 5b, 5c, 5d, 5e) for at least partially receiving corresponding contact pins (6a, 6b, 6c) on the preparation vessel (2),
**characterized in that**
at least a first one of the contact sockets (5c) comprises at least one signaling means (8), that the signaling means (8) generates at least one insertion signal when one of the contact pins (6b) is inserted at least partially into the first contact socket (5c), that when the insertion signal is present, at least one other of the contact sockets (5a, 5b, 5d, 5e) can be supplied with a working voltage, and that without the insertion signal being present, none of the contact sockets (5a, 5b, 5c, 5d, 5e) can be supplied with a working voltage, that the first of the contact sockets (5c) is electrically connected to a ground contact, and that the receiving device has a control device which controls the electrical contacting of the contact sockets dependent on the presence and absence of an insertion signal.

2. Mounting device (1) according to the preamble of claim 1,
**characterized in that**
at least two of the contact sockets (5a, 5b, 5c, 5d, 5e) respectively comprise at least one signaling means (8), that the signaling means (8) generate at least one insertion signal when each one of the contact pins (6a, 6b, 6c) is simultaneously inserted at least partially into each of the two contact sockets (5a, 5b, 5c, 5d, 5e), that when the insertion signal is present, at least one of the contact sockets (5a, 5b, 5c, 5d, 5e) can be supplied with a working voltage, and that without the insertion signal being present, none of the contact sockets (5a, 5b, 5c, 5d, 5e) can be supplied with a working voltage, **in that** one of the two contact sockets (5a, 5b, 5d, 5e) is connected to signal means (8) with a ground contact and a working voltage can be applied to one of the two contact sockets (5a, 5b, 5d, 5e), and **in that** the receiving device has a control device which controls the electrical contacting of the contact sockets dependent on the presence and absence of an insertion signal.

3. Mounting device (1) according to claim 1 or 2,
**characterized in that**
an insertion signal is generated at a predetermined depth of penetration of a contact pin (6a, 6b, 6c) into a contact socket (5a, 5b, 5c, 5d, 5e), in particular at a depth of penetration of between 10% and 75%, preferably 50%, of the total depth of a contact socket (5a, 5b, 5c, 5d, 5e).

4. Mounting device (1) according to one of claims 1 to 3,
**characterized in that**
the signaling means (8) comprises at least one electrical switching element (11), in particular a microswitch or a magnet switch.

5. Mounting device (1) according to one of claims 1 to 4,
**characterized in that**
the signaling means (8) comprises an actuating element (9) movably retained in the contact socket (5c), and that the insertion signal can be generated at least indirectly by the actuating element (9).

6. Mounting device (1) according to claim 5,
**characterized in that**
the actuating element (9) is formed at least in part, in particular entirely, of a nonconducting material.

7. Mounting device (1) according to claim 5 or 6,
**characterized in that**
the actuating element (9) is guided in a switch housing (14), and that the switch housing (14) is float mounted, in particular that the switch housing (14) is formed of at least two parts.

8. Mounting device (1) according to one of claims 5 to 7,
**characterized in that**
a resetting means (15) acts on the actuating element (9), preferably that the resetting means (15) constantly exerts a force on the actuating element (9) in the direction of a starting position, especially preferably that the resetting means (15) comprises at least one spring and/or at least one magnet.

9. Mounting device (1) according to claim 7 or 8,
**characterized in that**
the switch housing (14) and a contact retainer (18) containing the contact sockets (5a, 5b, 5c, 5d, 5e) are aligned with the actuating element (9) with respect to each other.

10. Mounting device (1) according to one of claims 1 to 9,
**characterized in that**
at least five contact sockets (5a, 5b, 5c, 5d, 5e) are provided, in particular that a first contact socket (5c) is connected to a ground contact, that a second contact socket (5b) and a third contact socket (5d) serve for connecting the heating device and a fourth contact socket (5a) and a fifth contact socket (5e) serve for connecting NC-signals.

11. Kitchen appliance with at least one mounting device (1) for at least one preparation vessel (2) for food with a heating device, with at least one power supply and at least one motor for driving a rotating tool (22) in the preparation vessel (2),
**characterized in that**
the mounting device (1) is formed according to at least one of claims 1 to 10.

12. Mounting station (20) for a preparation vessel (2) for food with a heating device, with at least one mounting device (1) for the preparation vessel (2),
**characterized in that**
the mounting device (1) is formed according to at least one of claims 1 to 10.

13. Mounting station (20) according to claim 12,
**characterized in that**
the mounting device (1) comprises at least one mechanical interface (21a) for driving a rotating tool (22) in an insertable preparation vessel (2).

## Revendications

1. Dispositif de réception (1) pour recevoir au moins un récipient de préparation (2) pour des aliments avec un dispositif de chauffage, présentant au moins une zone de réception (4) pour le récipient de préparation (2) et au moins trois douilles de contact (5a, 5b, 5c, 5d, 5e) pour recevoir au moins partiellement des broches de contact correspondantes (6a, 6b, 6c) sur le récipient de préparation (2),
**caractérisé en ce que**
au moins une première des douilles de contact (5c) présente au moins un moyen de signalisation (8), **en ce que** le moyen de signalisation (8) génère au moins un signal d'introduction lorsque l'une des broches de contact (6b) est insérée au moins partiellement dans la première douille de contact (5c), **en ce que**, en présence d'un signal d'introduction, au moins une autre des douilles de contact (5a, 5b, 5d, 5e) peut être soumise à une tension de travail, **en ce que**, sans signal d'introduction, aucune des douilles de contact (5a, 5b, 5c, 5d, 5e) ne peut être soumise à une tension de travail, **en ce que** la première des douilles de contact (5c) est reliée électriquement à un contact de mise à la terre, et **en ce que** le dispositif de réception présente un dispositif de commande qui commande la mise en contact électrique des douilles de contact dépendant de la présence ou de l'absence d'un signal d'introduction.

2. Dispositif de réception (1) selon la préambule de la revendication 1,
**caractérisé en ce que**
au moins deux des douilles de contact (5a, 5c, 5c, 5d, 5e) présentent chacune au moins un moyen de signalisation (8), **en ce que** les moyens de signalisation (8) génèrent au moins un signal d'introduction lorsque l'une des broches de contact (6a, 6b, 6c) respectivement est introduit simultanément au moins partiellement dans les deux douilles de contact (5a, 5b, 5d, 5e), **en ce que**, en présence d'un signal d'introduction, au moins l'une des douilles de contact (5a, 5b, 5c, 5d, 5e) peut être soumise à une tension de travail, **en ce que**, sans signal d'introduction, aucune des douilles de contact (5a, 5b, 5d, 5e) peut être soumise à une tension de travail, que l'une des deux douilles de contact (5a, 5b, 5d, 5e) est reliée à des moyens de signalisation (8) avec un contact de mise à la terre et qu'une tension de travail peut être appliquée à l'une des deux douilles de contact (5a, 5b, 5d, 5e), et que le dispositif de réception présente un dispositif de commande qui commande la mise en contact électrique des douilles de contact dépendant de la présence et de l'absence d'un signal d'introduction.

3. Dispositif de réception (1) selon l'une des revendications 1 ou 2,
**caractérisé en ce que**
un signal d'insertion est généré à une profondeur de pénétration prédéterminée d'une broche de contact (6a, 6b, 6c) dans une douille de contact (5a, 5b, 5c, 5d, 5d), en particulier à une profondeur de pénétration comprise entre 10 % et 75 %, de préférence 50 %, de la profondeur totale d'une douille de contact (5a, 5b, 5c, 5d, 5d).

4. Dispositif de réception (1) selon l'une quelconque des revendications 1 à 3,
**caractérisé en ce que**
le moyen de signalisation (8) présente au moins un élément de commutation électrique (11), en particulier un microrupteur ou un interrupteur magnétique.

5. Dispositif de réception (1) selon l'une quelconque des revendications 1 à 4,
**caractérisé en ce que**
le moyen de signalisation (8) présente un élément d'actionnement (9) maintenu mobile dans la douille de contact (5c), et **en ce que** l'élément d'actionnement (9) permet de générer au moins indirectement le signal d'introduction.

6. Dispositif de réception (1) selon la revendication 5,
**caractérisé en ce que**
l'élément d'actionnement (9) est réalisé au moins partiellement, en particulier entièrement, d'un matériau non conducteur.

7. Dispositif de réception (1) selon la revendication 5 ou 6,
**caractérisé en ce que**
l'élément d'actionnement (9) est guidé dans un boîtier de commutation (14), et **en ce que** le boîtier de commutation (14) est monté flottant, en particulier **en ce que** le boîtier de commutation (14) est réalisé au moins en deux parties.

8. Dispositif de réception (1) selon l'une des revendications 5 à 7,
**caractérisé en ce que**
un moyen de remise (15) agit sur l'élément d'actionnement (9), de préférence que le moyen de remise (15) exerce toujours une force en direction d'une position initiale sur l'élément d'actionnement (9), de manière particulièrement préférée que le moyen de remise (15) présente au moins un ressort et/ou au moins un aimant.

9. Dispositif de réception (1) selon la revendication 7 ou 8,
**caractérisé en ce que**
le boîtier de commutation (14) et un logement de contact (18) contenant les douilles de contact (5a, 5b, 5c, 5d, 5e) sont alignés avec l'élément d'actionnement (9).

10. Dispositif de réception (1) selon l'une quelconque des revendications 1 à 9,
**caractérisé en ce que**
au moins cinq douilles de contact (5a, 5b, 5c, 5d, 5e) sont présentes, en particulier qu'une première douille de contact (5c) est reliée à un contact de mise à la terre, qu'une deuxième douille de contact (5b) et une troisième douille de contact (5d) servent à la liaison du dispositif de chauffage ainsi qu'une quatrième douille de contact (5a) et une cinquième douille de contact (5e ) servent à la liaison de signaux NC.

11. Robot ménager avec au moins un dispositif de réception (1) pour au moins un récipient de préparation (2) pour aliments avec un dispositif de chauffage, au moins une alimentation électrique et au moins un moteur pour l'entraînement d'un outil rotatif (22) dans le récipient de préparation (2),
**caractérisé en ce que**
le dispositif de réception (1) est réalisé selon au moins l'une des revendications 1 à 10.

12. Station de réception (20) pour un récipient de préparation (2) pour aliments avec un dispositif de chauffage, avec au moins un dispositif de réception (1) pour le récipient de préparation (2),
**caractérisé en ce que**
le dispositif de réception (1) est réalisé selon au moins l'une des revendications 1 à 10.

13. Station de réception (20) selon la revendication 12,
**caractérisé en ce que**
le dispositif de réception (1) présente au moins une interface mécanique (21a) pour l'entraînement d'un outil rotatif (22) peuvant être reçu dans un récipient de préparation (2).
